# EUROPÄISCHE PATENTSCHRIFT

(11) **EP 1 228 907 B1**
(45) Veröffentlichungstag und Bekanntmachung des Hinweises auf die Patenterteilung: **28.10.2009**
(21) Anmeldenummer: 02000640.9
(22) Anmeldetag: 11.01.2002
(51) Int. Cl.: B60H 1/00, B60H 3/06

(54) **Klimagerät für ein Kraftfahrzeug**
Air conditioning device for a motor vehicle
Appareil de climatisation pour véhicule automobile

(30) Priorität: 03.02.2001 DE 10104907
(43) Veröffentlichungstag der Anmeldung: 07.08.2002
(73) Patentinhaber: Behr GmbH & Co. KG, 70469 Stuttgart (DE)
(72) Erfinder: Klingler, Dietrich, 73540 Heubach (DE); Schmadl, Dieter, 71672 Marbach (DE); Schwahn, Werner, 71701 Schwieberdingen (DE); Voigt, Klaus, 74321 Bietigheim-Bissingen (DE)
(74) Vertreter: Grauel, Andreas

(56) Entgegenhaltungen:
- EP-A- 0 214 605
- EP-A- 0 634 299
- EP-A- 1 090 784
- EP-A- 1 092 573
- DE-C- 3 706 220

## Beschreibung

Die Erfindung betrifft ein Klimagerät für ein Kraftfahrzeug mit einem Gebläse zur Förderung von Luft durch ein Klimagehäuse, in dem ein Kühlwärmetauscher, ein Heizwärmetauscher und Luftstromsteuerlemente angeordnet sind.

Aus der DE 198 58 727 ist eine derartige Klimaanlage bekannt, die zur besseren Ausnutzung des Bauraumes im Cockpit-Bereich eines Kraftfahrzeuges eine in Fahrzeugquerrichtung gestreckte Gestalt aufweist. Bei einer solchen Klimaanlage, die in Fahrzeugquerrichtung ihre größte Ausdehnung hat, wobei die Wärmetauscher ebenfalls in Fahrzeugquerrichtung gestreckt ausgebildet sind, besteht das Problem, die von einem Gebläse geförderte Luft derart zu führen, daß die in Fahrzeugquerrichtung eine große Ausdehnung aufweisenden Wärmetauscher über ihre volle Länge gleichmäßig angeströmt werden. Aus diesem Grunde weist die bekannte Klimaanlage ein Gebläse mit einer Vielzahl von Lüfterrädern auf, wobei die Lüfterräder koaxial in Fahrzeugquerrichtung nebeneinander entlang der Fahrzeugquerrichtungsausdehnung der Klimaanlage angeordnet sind. Ein derartiges Gebläse ist einerseits kostenungünstig und andererseits wird entsprechender Bauraum für dieses Gebläse benötigt, so daß die bekannte Klimaanlage zwar in Fahrzeughöhenrichtung relativ schmal aufgebaut sein kann, in Fahrzeuglängsrichtung jedoch eine größere Ausdehnung aufweist.

Die EP 1 090 784 A2, welche einem Stand der Technik nach Art. 54(3) EPÜ entspricht, offenbart weiterhin eine Klimaanlage für Kraftfahrzeuge, bei welcher das Gebläse oberhalb des Kühtwärmetauschers angeordnet ist.

Ausgehend von diesem Stand der Technik ist es Aufgabe der Erfindung, die vorgenannten Nachteile zu vermeiden und ein verbessertes Klimagerät bereitzustellen, das den Bauraum im Cockpit-Bereich optimal ausnutzt und möglichst kostengünstig ist.

Diese Aufgabe wird gelöst durch ein Klimagerät mit den Merkmalen des Anspruchs 1.

Erfindungsgemäß ist vorgesehen, dass das Klimagerät derart ausgebindet ist, dass es mit einem Gebläse zur Förderung von Luft durch ein Klimagehäuse versehen ist, in dem ein Kühlwärmetauscher, ein Heizwärmetauscher und Luftstromsteuerelemente angeordnet sind, wobei das Klimagerät und die Wärmetauscher ihre größte Ausdehnung in Fahrzeugquerrichtung (y-Richtung) aufweisen, wobei das Gebläse in Fahrzeugquerrichtung seitlich an dem Klimagehäuse angeordnet ist und luftstromseitig zwischen Gebläse und Kühlwärmetauscher ein Luftfilter angeordnet ist, das in etwa die gleiche Erstreckung in Fahrzeugquerrichtung wie der Kühlwärmetauscher aufweist und das Luftfilter oberhalb des Kühlwärmetauschers flachliegend angeordnet ist, so daß die vom Gebläse geförderte Luft durch das Filter von oben nach unten und dann durch den Kühlwärmetauscher in etwa horizontal gefördert wird.

Auf diese Weise kann ein kostengünstiges, in heutigen Klimaanlagen verwendetes Gebläse, beispielsweise Radialgebläse eingesetzt werden, wobei durch den zwischen Gebläse und Kühkärmetauscher angeordneten Filter eine Vergleichmäßigung der Luftströmung Ober die Erstreckung der Klimaanlage in Fahrzeugquerrichtung erfolgt, so daß der Kühlwärmetauscher von der Luft gleichmäßig angeströmt wird, wobei ein gebläsenahes Ende des Kühlwärmetauschers und ein gebläsefemes Ende des Kühlwärmetauschers mit in etwa gleich großen Teilluftströmen angeströmt werden. Dadurch kann eine gleichmäßigere Ausströmung der aus den einzelnen Auslaßkanälen des Klimagehäuses austretenden Luft erreicht werden. So kann beispielsweise eine gleichmäßigere Beaufschlagung der Windschutzscheibe erreicht werden.

Durch die seitliche Anordnung des Gebläses und das seitliche Einleiten von Luft in das Klimagehäuse kann auf einen Diffusor zwischen Gebläse und Klimagehäuse, wie er in heutigen Klimaanlagen üblich ist, verzichtet werden, was wiederum Bauraum erspart. Desweiteren ist durch die seitliche Anordnung des Gebläses zwar die Erstreckung in Fahrzeugquerrichtung erhöht, die Ausdehnung in Fahrzeuglängsrichtung aber erheblich verkürzt ist, so daß der Bauraum im Cockpit verbessert ausnutzbar ist. Außerdem können durch die Bauraumersparnis in Fahrzeuglängsrichtung herkömmliche Schwenkluftklappen eingesetzt werden, wohingegen bei der aus der DE 198 58 727 bekannten Klimaanlage spezielle Filmjalousieklappen eingesetzt werden, damit die bekannte Klimaanlage keine zu große Ausdehnung in Fahrzeuglängsrichtung bekommt.

In Weiterbildung der Erfindung ist das Luftfilter oberhalb des Kühlwärmetauschers flachliegend angeordnet, so daß die vom Gebläse geförderte Luft durch das Filter von oben nach unten gefördert wird. Bei Einsatz eines Radialgebläses wäre dann die Gebläseachse in Fahrzeuglängsrichtung gelegen, so daß das Gebläse mit seinem Lüfterrad in Fahrzeuglängsrichtung eine geringe Ausdehnung hat und bauraumsparend seitlich an dem Klimagerät angeordnet werden kann.

Bevorzugt ist der Kühlwärmetauscher "stehend" angeordnet, also mit im wesentlichen vertikaler Luftanströmfläche. Dadurch ergibt sich der wesentliche Vorteil, daß am Kühlwärmetauscher entstehendes Kondenswasser verbessert ablaufen kann, so daß kein Kondenswasser sich in dem Kühlwärmetauscher ablagern kann und eventuell durch den Luftstrom in das Klimagerät gespritzt werden könnte. Bei der aus der DE 198 58 727 bekannten Klimaanlage ist der Kühlwärmetauscher liegend angeordnet und die Luft bläst entgegen dem Wasserablauf, wodurch sich das Problem der Kondenswasserabführung stellt, zu dessen Lösung besondere Konstruktionen notwendig sind, wie sie beispielsweise aus der DE 198 35 448 bekannt sind.

In Weiterbildung der Erfindung ist längs des Filters ein mit wenigstens einer Bypassklappe verschließbarer Luftbypass vorgesehen, so daß die Luft auch ungefiltert dem Kühlwärmetauscher zugeführt werden kann. Da der Luftbypass sich über die volle Länge des Filters und damit über die große Ausdehnung der Klimaanlage in Fahrzeugquerrichtung erstreckt, ist der Luftbypass im wesentlichen als schmale, langgezogene Öffnung ausgebildet, so daß auch bei geöffnetem Luftbypass gewährleistet ist, daß die vom Gebläse geförderte Luft sich über die gesamte Erstreckung der Klimaanlage in Fahrzeugquerrichtung verteilt und auch bei geöffnetem Bypass der Kühlwärmetauscher möglichst gleichmäßig von Luft angeströmt wird.

Um eine Links-/ Rechtstrennung der Klimaanlage zu ermöglichen, ist wenigstens stromabseitig des Heizwärmetauschers wenigstens eine das Klimagerät in zwei Bereiche teilende Trennwand vorgesehen.

Im folgenden wird die Erfindung anhand eines Ausführungsbeispieles unter Bezugnahme auf die Zeichnung im einzelnen erläutert. In der Zeichnung zeigen:
- Fig. 1: eine perspektivische Ansicht eines erfindungsgemäßen Klimageräts;
- Fig. 2: einen Schnitt entlang der Linie II - II aus Fig. 3;
- Fig. 3: einen Querschnitt entlang der Ebene III aus Fig. 1;
- Fig. 4: einen Querschnitt entlang der Ebene IV aus Fig. 2;
- Fig. 5 und 6: Querschnitte einer weiteren Ausführungsform entsprechend den Fig. 3 und 4 jedoch mit luftseitiger Temperaturregelung.

Für die folgende Beschreibung der Ausführungsbeispiele ist es hilfreich, ein Koordinatensystem zu definieren, wie es im Kraftfahrzeugbau üblich ist. Die X-Richtung entspricht dabei der Fahrzeuglängsrichtung, die Y-Richtung der Fahrzeugquerrichtung und die Z-Richtung der Fahrzeughochachse. Zum besseren Verständnis ist in den Figuren der Zeichnungen jeweils das Koordinatenkreuz eingezeichnet.

Ein erfindungsgemäßes Klimagerät 10 weist ein Klimagehäuse 12 zur Führung von zu konditionierender Luft und ein Gebläse 14 zur Förderung der Luft auf. Das Gebläse 14 umfaßt einen Gebläsemotor 16, der ein Gebläserad 18 antreibt. Das Gebläse 14 ist vorzugsweise als Radialgebläse ausgebildet.

In dem Klimagehäuse 12 ist ein Luftfilter 20, ein Kühlwärmetauscher 22 und ein Heizwärmetauscher 24 zur Konditionierung der Luft angeordnet. Stromabseitig des Heizwärmetauschers 24 sind verschiedene Luftauslässe angeordnet, die über verschiedene Luftstromsteuerelemente öffen- oder verschließbar sind, wie weiter unten näher erläutert wird.

Das Gebläse 14 ist seitlich an dem Klimagehäuse 12 angeordnet, so daß das Gebläse 14 und das Klimagehäuse 12 in y-Richtung gesehen hintereinanderliegen. Die Luft wird somit seitlich in das Klimagehäuse 12 in y-Richtung eingeblasen und zwar in etwa parallel zu einer Anströmfläche 21 des Luftfilters 20.

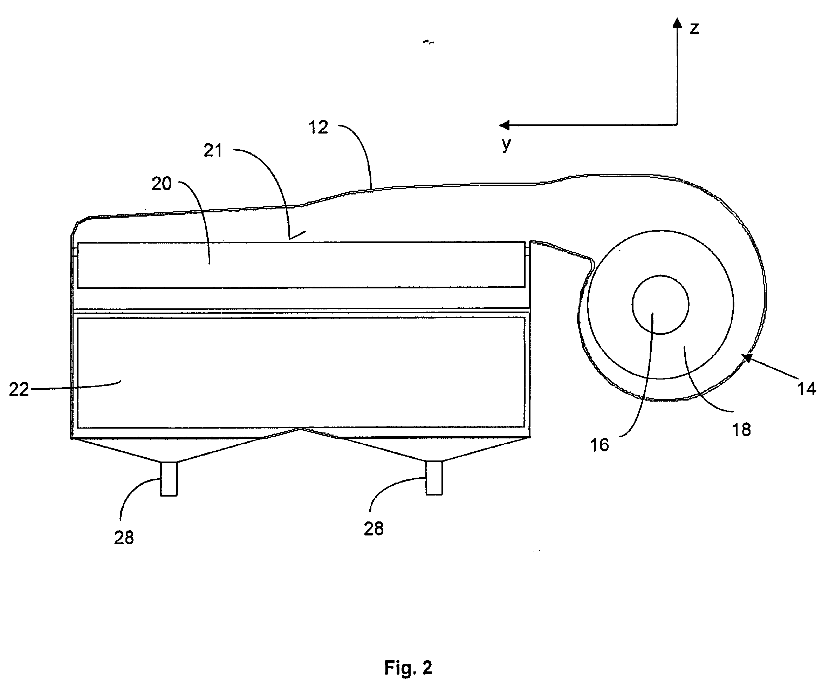

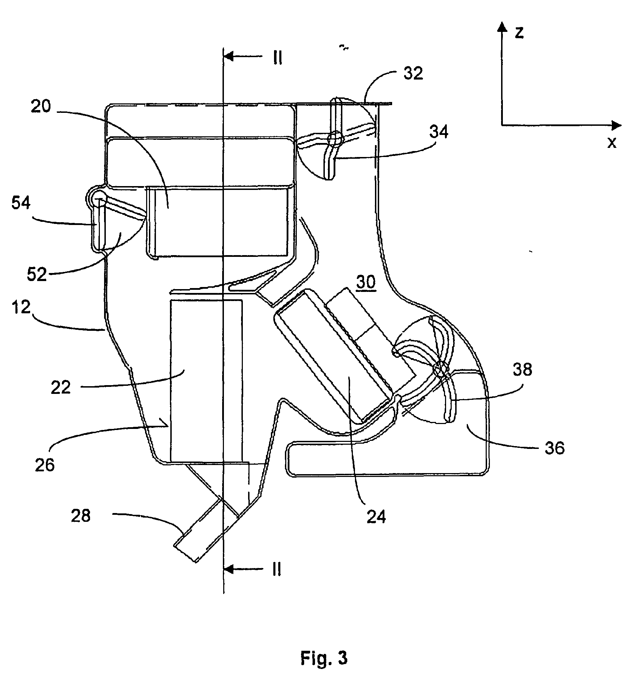

Das Klimagehäuse 12 sowie das Filter 20 und die Wärmetauscher 22 und 24 sind in y-Richtung erheblich gestreckt ausgebildet, so daß deren größte Ausdehnung sich in y-Richtung erstreckt. So ist die y-Erstreckung dieser Komponenten in etwa mindestens fünf mal so groß wie die x- oder z-Erstreckung. Das Luftfilter 20 und der Kühlwärmetauscher 22 sind zueinander derart angeordnet, daß deren Luftanströmflächen 21 bzw. 26 in etwa zueinander senkrecht angeordnet sind. Bevorzugt ist das Luftfilter 20 oberhalb des Kühlwärmetauschers 22 flachliegend angeordnet, wie in Fig. 2 und 3 zu erkennen, so daß die von dem Gebläse 14 geförderte Luft zunächst in y-Richtung eingeblasen wird und sich oberhalb des Filters 20 vergleichmäßigen kann und dann durch das Filter 20 von oben nach unten in z-Richtung strömt, dann in x-Richtung umgelenkt wird und durch den Kühlwärmetauscher 22 in etwa horizontal gefördert wird.

Luftstromseitig parallel zu dem Filter 20 ist ein Filterbypass 52 vorgesehen, der über wenigstens eine Filterbypassklappe 54 verschließbar ist. Je nach Bedarf kann die Luft gefiltert oder ungefiltert dem Fahrzeuginnenraum zugeführt werden.

In dem Kühlwärmetauscher 22 kann die Luft abgekühlt werden, wobei gegebenenfalls Kondenswasser entstehen kann, das über Kondenswasserablaufkanäle 28 aus dem Klimagehäuse 12 ablaufen kann.

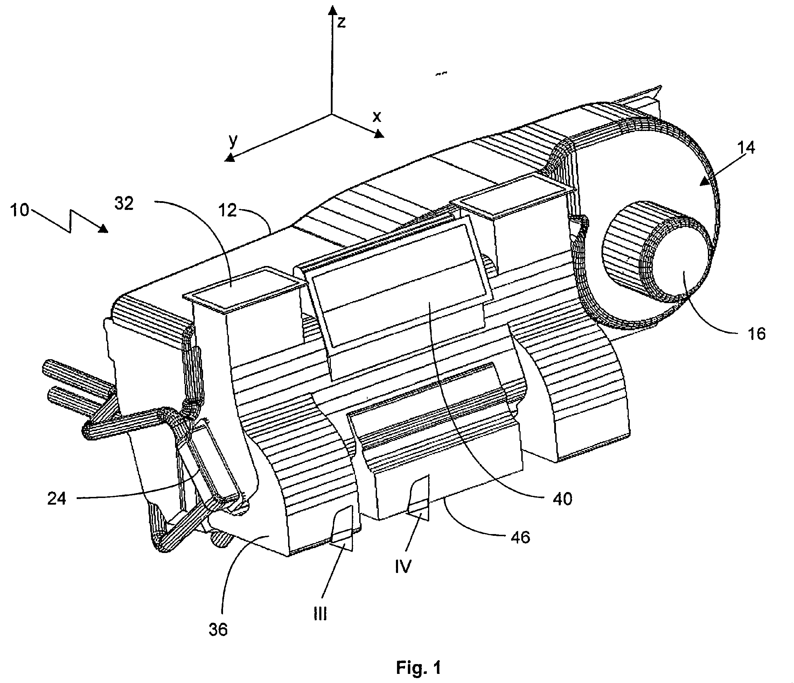

In einem ersten Ausführungsbeispiel entsprechend den Fig. 1 bis 4 wird die in dem Kühlwärmetauscher 26 abgekühlte Luft von dem Kühlwärmetauscher 26 zu einem Heizwärmetauscher 24 geführt, in dem die Luft auf eine gewünschte Temperatur wieder erwärmt werden kann. Für diese wasserseitige Temperaturregelung ist die Temperatur des Heizwärmetauschers 24 über dessen Wasserdurchfluß regelbar.

Von einer Warmluftkammer 30, die stromabseitig des Heizwärmetauschers 24 gelegen ist, kann die Luft über einen Defrostluftauslaß 32, der über eine Defrostluftklappe 34 verschließbar ist, einer Windschutzscheibe zugeführt werden. Über einen Fußraumluftauslaß 36, der über eine Fußraumluftklappe 38 verschließbar ist, kann die erwärmte Luft einem Fußraum im Fahrer- bzw. Beifahrerbereich zugeführt werden.

Um eine Links-/Rechtstrennung der Temperaturregelung zu erreichen, ist in dem Klimagehäuse in y-Richtung gesehen mittig und wenigstens stromab des Heizwärmetauschers 24 eine Trennwand 31 vorgesehen, so daß das Klimagehäuse gegenüber einer Trennwandebene im wesentlichen spiegelbildlich ausgebildet ist. Es sind somit zwei Defrostluftausläße 32 und zwei Fußraumluftausläße 36, wie in Fig. 1 zu erkennen, vorhanden.

Wie in Fig. 1 dargestellt ist, ist in y-Richtung neben jedem Defrostluftauslaß 32 eine Belüftungsluftöffnung 40 vorgesehen, über die erwärmte Luft aus der Warmluftkammer 30 der Mittelebene des Fahrzeuginnenraums zugeführt werden kann, wobei dieser Luft Kaltluft über einen Kaltluftbypass 42, der mit einer Bypassklappe 44 absperrbar ist, zugeführt werden, um die Luft in der Mittelebene bedarfsweise abkühlen zu können, was aus Komfortgründen gewünscht sein kann.

Über je einen in y-Richtung neben je einem der Fußraumluftausläße angeordenten Fondraumluftkanal 46 kann über eine Fondraumwarmluftklappe 48 dem Fondraum Warmluft aus der Warmluftkammer 30 zugeführt werden und/oder über eine Fondraumkaltluftklappe 50, über die Kaltluft aus dem Raum zwischen dem Kühlwärmetauscher 22 und dem Heizwärmetauscher 24 entnommen werden kann, Kaltluft zugeführt werden. Dadurch kann die dem Fondraum zugeführte Luft separat temperiert werden.

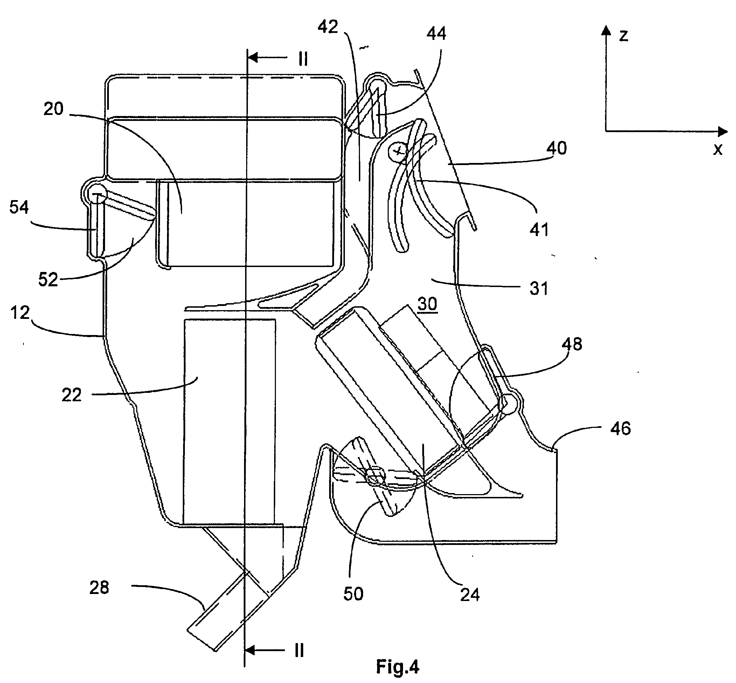

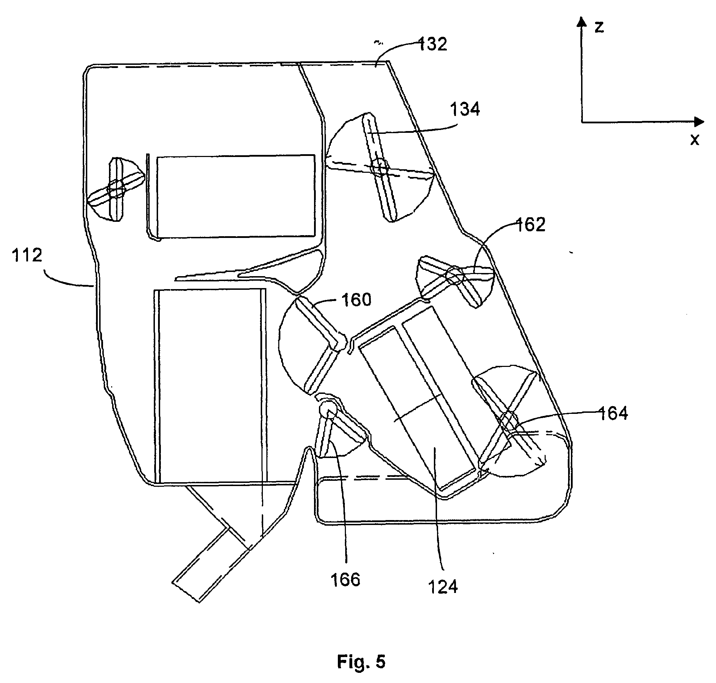

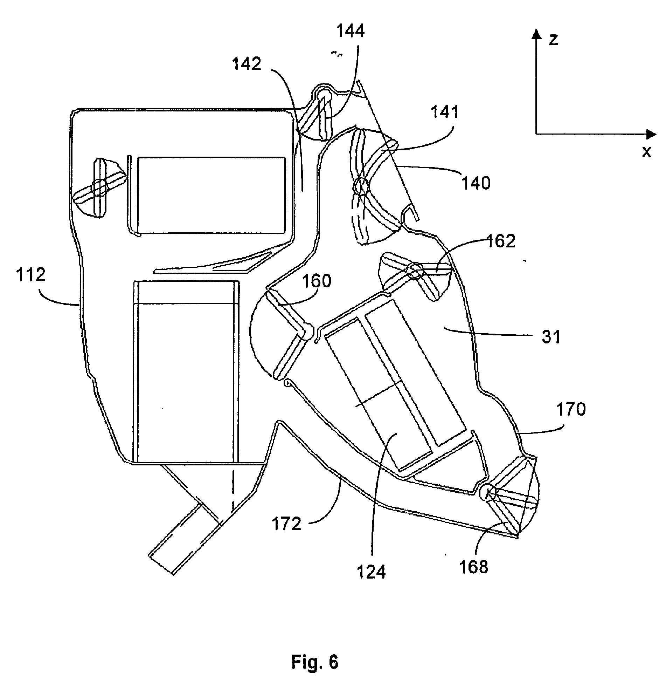

Anstelle einer wasserseitigen Temperaturregelung, wie sie unter Bezugnahme auf die Fig. 3 und 4 beschrieben ist, kann in einer weiteren Ausführungsform auch eine luftseitige Temperaturregelung vorgesehen sein, wie an Hand eines weiteren Ausführungsbeispiels, das in den Figuren 5 und 6 dargestellt ist, erläutert werden soll. Die Schnittebene der Figur 5 entspricht dabei der Schnittebene der Figur 3 und die Bezugszeichen bezüglich dieser weiteren Ausführungsform entsprechen im wesentlichen den Bezugszeichen der ersten Ausführungsform, wobei jeweils die Bezugszeichen um 100 erhöht sind.

Neben der bereits aus den ersten Ausführungsbeispielen bekannten Defrostluftklappe 134, mit der die Defrostluftauslaßöffnung 132 verschließbar ist (Fig. 5) und einer Belüftungsöffnung 140, mit Belüftungsklappe 141 (Fig. 6), sowie Kaltluftbypass 142, mit Kaltluftbypassklappe 144 (Fig. 6), ist als zusätzliche, die Temperatur regelndes Element eine Mischklappe 160 vorgesehen, mit der entweder Kaltluft an dem Heizwärmetauscher 124 vorbeigeführt werden kann, oder Kaltluft zur Erwärmung durch den Heizwärmetauscher 124 geführt werden kann. Stromabseitig des Heizwärmetauschers 124 ist einerseits eine Warmluftklappe 162 angeordnet, mit der Warmluft in Richtung der Defrostauslaßöffnung 132 bzw. der Belüftungsöffnung 140 nach oben geführt werden kann. Bei reinem Kaltluftbetrieb ist die Klappe 162 geschlossen, so daß der heiße Heizwärmetauscher 124 nicht ungewollt die Kaltluft erwärmen kann. Im unteren Bereich des Warmluftbereichs stromabseitig des Heizwärmetauschers 124 ist entsprechend Figur 5 eine Warmluftfußraumklappe 164 angeordnet, über die Warmluft dem Fußraum für den Fahrer- bzw. Beifahrerbereich zugeführt werden kann. Über eine Fußraumkaltluftklappe 166 kann dem Fußraum auch Kaltluft zugeführt werden.

Die Bereiche zur Temperierung der Defrost- und der Fußraumluft (Fig. 5) sind, wie in dem ersten Ausführungsbeispiel, in y-Richtung neben den Luftaufbereitungsbereichen für die Belüftung der Mittelebene und des Fondraums (Fig. 6) angeordnet.

Die Luft zum Fondraum kann über eine Fondraummischluftklappe 168 in ihrer Temperatur eingestellt werden, indem dem Fondraum Warmluft oder Kaltluft oder eine Mischung aus Warm- und Kaltluft zugeführt werden kann, wozu stromabseitig des Heizwärmetauschers 124 ein Warmluftkanal 170 und vom zwischen dem Kühlwärmetauscher 122 und dem Heizwärmetauscher 124 gelegenen Kaltluftraum ein Fondraumkaltluftkanal 172 abzweigt.

## Patentansprüche

1. Klimagerät für ein Kraftfahrzeug mit einem Gebläse (14) zur Förderung von Luft durch ein Klimagehäuse (12) in dem ein Kühlwärmetauscher (22), ein Heizwärmetauscher (24) und Luftstromsteuerelemente angeordnet sind, wobei das Klimagerät und die Wännetauscher (24) ihre größte Ausdehnung in Fahrzeugquerrichtung aufweisen, wobei das Gebläse (14) in Fahrzeugquerrichtung seitlich an dem Klimagehäuse (12) angeordnet ist und luftstromseitig zwischen Gebläse (14) und Kühlwärmetauscher (22) ein Luftfilter (20) angeordnet ist, das in etwa die gleiche Erstreckung in Fahrzeugquerrichtung wie der Kühlwärmetauscher (22) aufweist und das Luftfilter (20) oberhalb des Kühlwärmetauschers (22) flachliegend angeordnet ist, so daß die vom Gebläse (14) geförderte Luft durch das Filter (20) von oben nach unten und dann durch den Kühlwärmetauscher (22) in etwa horizontal gefördert wird.

2. Klimagerät nach Anspruch 1, **dadurch gekennzeichnet, daß** der Kühlwärmetauscher (22) stehend angeordnet ist, also mit im wesentlichen vertikaler Luftanströmfläche (26).

3. Klimagerät nach einem der vorhergehenden Ansprüche, **dadurch gekennzeichnet, daß** längs des Filters (20) ein mit wenigstens einer Bypassklappe (54) verschließbarer Luftbypass (52) vorgesehen ist.

4. Klimagerät nach einem der vorhergehenden Ansprüche, **dadurch gekennzeichnet, daß** wenigstens stromabseitig des Heizwärmetauschers (24, 124) wenigstens eine das Klimagehäuse (12) in zwei Bereiche teilende Trennwand (31) vorgesehen ist.

## Claims

1. An air-conditioning device for a motor vehicle with a blower (14) for feeding air through an air-conditioning housing (12), in which are arranged a cooling heat exchanger (22), a heating heat exchanger (24), and airflow control elements, wherein the air-conditioning device and the heat exchangers (24) have their greatest dimension in the transverse direction of the vehicle, wherein the blower (14) is arranged laterally at the air-conditioning housing (12) in the transverse direction of the vehicle, and an air filter (20) is arranged at the airflow side between the blower (14) and the cooling heat exchanger (22), which filter has approximately the same dimension in the transverse direction of the vehicle as the cooling heat exchanger (22), and the air filter (20) is arranged in a flat manner above the cooling heat exchanger (22), so that the air (14) fed from the blower (14) is fed approximately horizontally from top to bottom through the filter (20) and then through the cooling heat exchanger (22).

2. An air-conditioning device as claimed in claim 1, **characterised in that** the cooling heat exchanger (22) is arranged generally vertically, that is, with a generally vertical airflow face (26).

3. An air-conditioning device as claimed in one of the preceding claims, **characterised in that** an air bypass (52) is provided along the filter (20), which can be closed off with at least one bypass flap (54).

4. An air-conditioning device as claimed in one of the preceding claims, **characterised in that** a dividing wall (31) is provided which divides the air-conditioning housing (12) at least into two regions at least downstream of the heating heat exchanger (24, 124).

## Revendications

1. Dispositif de climatisation pour un véhicule automobile, comprenant une soufflante (14) servant au transport d'air à travers un carter de climatisation (12), dispositif de climatisation dans lequel sont disposés un échangeur de chaleur de refroidissement (22), un échangeur de chaleur de chauffage (24) et des éléments de commande de flux d'air, où le dispositif de climatisation et les échangeurs de chaleur (24) présentent leur plus grande étendue dans le sens transversal du véhicule, où la soufflante (14) est disposée latéralement sur le carter de climatisation (12) dans le sens transversal du véhicule et, côté écoulement d'air, entre la soufflante (14) et l'échangeur de chaleur de refroidissement (22), est disposé un filtre à air (20) qui présente, dans le sens transversal du véhicule, à peu près la même étendue que l'échangeur de chaleur de refroidissement (22), et le filtre à air (20) est disposé à plat au-dessus de l'échangeur de chaleur de refroidissement (22), de sorte que l'air transporté par la soufflante (14) est transporté du haut vers le bas à travers le filtre (20) et, ensuite, à peu près de façon horizontale à travers l'échangeur de chaleur de refroidissement (22).

2. Dispositif de climatisation selon la revendication 1, **caractérisé en ce que** l'échangeur de chaleur de refroidissement (22) est disposé verticalement, donc avec une surface d'afflux d'air (26) sensiblement verticale.

3. Dispositif de climatisation selon l'une ou l'autre des revendications précédentes, **caractérisé en ce qu'**il est prévu, le long du filtre (20), une dérivation d'air (52) pouvant être fermée par au moins un volet de dérivation (54).

4. Dispositif de climatisation selon l'une quelconque des revendications précédentes, **caractérisé en ce qu'**il est prévu, au moins en aval de l'échangeur de chaleur de chauffage (24, 124), au moins une paroi de séparation (31) divisant le carter de climatisation (12) en deux zones.
